## Europäisches Patentamt
## European Patent Office
## Office européen des brevets

(11) Numéro de publication: **0 057 639**
**B1**

(12) **FASCICULE DE BREVET EUROPEEN**

(45) Date de publication du fascicule du brevet:
**04.12.85**

(21) Numéro de dépôt: **82400146.5**

(22) Date de dépôt: **27.01.82**

(51) Int. Cl.⁴: **F 16 D 65/54,** F 16 D 51/24

(54) **Frein à tambour.**

(30) Priorité: **30.01.81 FR 8101835**

(43) Date de publication de la demande:
**11.08.82 Bulletin 82/32**

(45) Mention de la délivrance du brevet:
**04.12.85 Bulletin 85/49**

(84) Etats contractants désignés:
**DE GB IT NL SE**

(56) Documents cités:
**DE - A - 2 145 378**
**FR - A - 2 397 566**
**FR - A - 2 418 386**
**US - A - 3 118 519**

(73) Titulaire: **BENDIX France, Centre Paris Pleyel,**
**F-93521 St-Denis Cédex 01 (FR)**

(72) Inventeur: **Muscat, Gérard, 66, Avenue de Suffren,**
**F-93150 Le Blanc Mesnil (FR)**

(74) Mandataire: **Poidatz, Emmanuel et al, Service Brevets**
**Bendix 44 rue François 1er, F-75008 Paris (FR)**

BUNDESDRUCKEREI BERLIN

## Description

L'invention concerne un frein à tambour.

L'invention se rapporte plus particulièrement à un frein à tambour du type comportant une plaque support sur laquelle sont montés coulissants deux segments susceptibles d'être amenés en engagement de friction contre un tambour tournant par un moteur de frein interposé entre deux extrémités adjacentes des segments, et comportant une entretoise interposée entre ces mêmes extrémités des segments et coopérant avec au moins un des segments au travers d'un dispositif de rattrapage d'usure.

Un frein de ce type et selon le préambule de la revendication 1 est proposé dans le document FR-A-2 418 386. Le document enseigne d'articuler une extrémité de l'entretoise sur un des segments, l'autre extrémité de l'entretoise coopérant au travers d'un guidage avec une saillie formée sur l'autre segment, le déplacement relatif du guidage et de la saillie étant contrôlé par un dispositif à friction assurant le réglage automatique de l'écartement des segments en fonction de l'usure des éléments de friction. Ce dispositif présente néanmoins l'inconvénient que au fur et à mesure de l'usure des éléments de friction, les segments entraînent l'entretoise dans un mouvement tendant à rapprocher celle-ci de l'axe de rotation du tambour. La partie centrale du frein étant traversée par le moyeu sur lequel est fixé le tambour et la roue du véhicule, le mouvement de l'entretoise en direction de ce moyeu peut amener celle-ci à entrer en contact avec le moyeu tournant, ce mouvement étant d'autant plus important que l'épaisseur à user des éléments de friction est importante. Le contact entre l'entretoise et le moyeu peut avoir deux inconvénients majeurs, d'une part la limitation du mouvement de ladite entretoise peut amener un fonctionnement incorrect du frein, et d'autre part le frottement entre l'entretoise et le moyeu peut amener la rupture, après usure, soit de l'entretoise soit du moyeu.

L'invention propose un frein du type défini ci-dessus dans lequel de tels inconvénients sont évités, le frein comportant un dispositif maintenant ladite entretoise dans une position sensiblement constante par rapport à sa position initiale, et ceci quel que soit l'état d'usure des éléments de friction.

Dans ce but, l'invention propose un frein à tambour comportant une plaque support sur laquelle sont montés cou lissant deux segments comportant des éléments de friction et susceptibles d'être amenés en engagement de friction contre un tambour tournant par un moteur de frein interposé entre deux premières extrémités adjacentes desdits segments et comportant une entretoise placée entre lesdites premières extrémités et coopérant avec au moins un desdits segments au travers d'un dispositif de rattrapage d'usure destiné à maintenir lesdits segments à une distance relative d'autant plus grande que l'usure des éléments de friction est élevée, le frein comportant un dispositif de maintien de l'entretoise à une certaine distance du moteur de frein, ledit dispositif de maintien relié d'une part à un desdits segments et d'autre part à ladite entretoise comporte un guidage et une saillie susceptibles de coopérer lors du déplacement relatif desdits deux segments, caractérisé en ce que ledit guidage forme une rampe inclinée de telle sorte que la distance entre ladite entretoise et ledit moteur de frein reste sensiblement constante.

On décrira maintenant, à titre d'exemple non limitatif, trois modes de réalisation de l'invention dans lesquels les figures 1 et 2 représentent un premier mode, les figures 3 et 4 un deuxième mode et les figures 5 à 7 un troisième mode de réalisation:

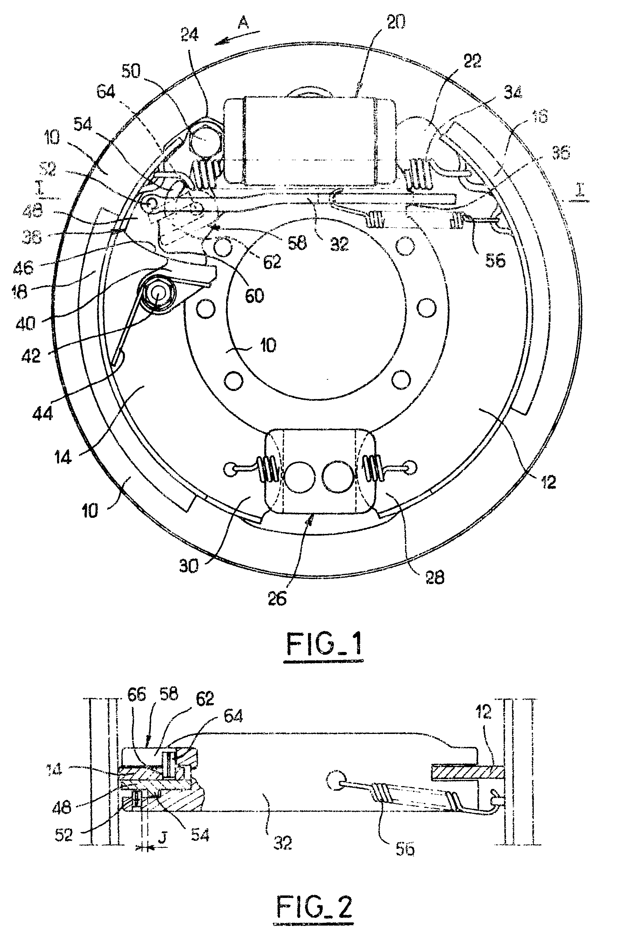

La figure 1 représente une vue en plan d'un frein à tambour selon l'invention;

la figure 2 représente une vue en coupe selon la ligne I-I du frein de la figure 1;

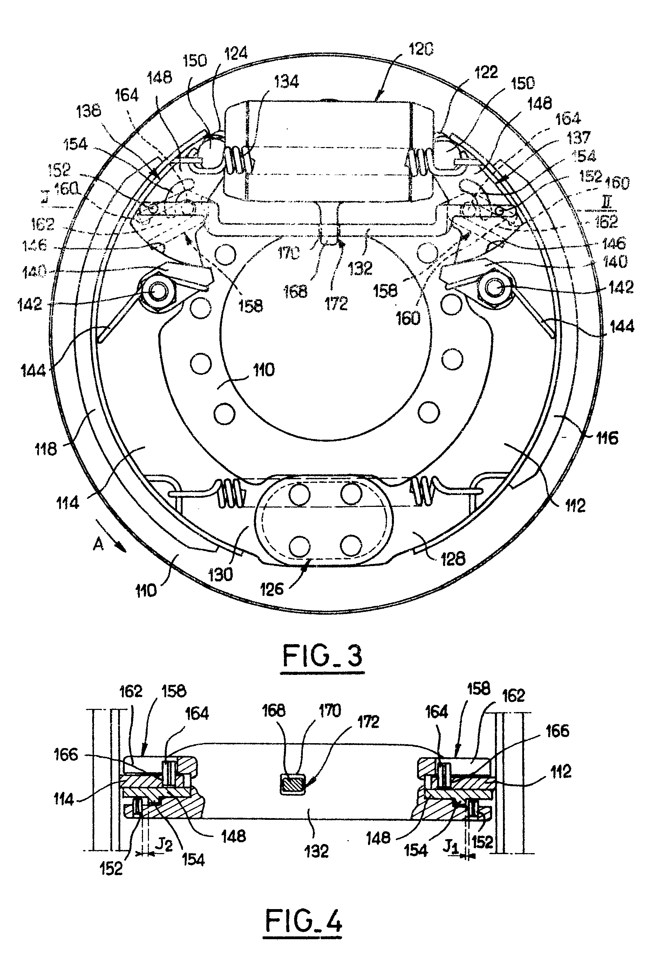

la figure 3 représente une vue en plan d'un frein à tambour selon un deuxième mode de réalisation;

la figure 4 est une vue en coupe selon la ligne II-II du frein de la figure 3;

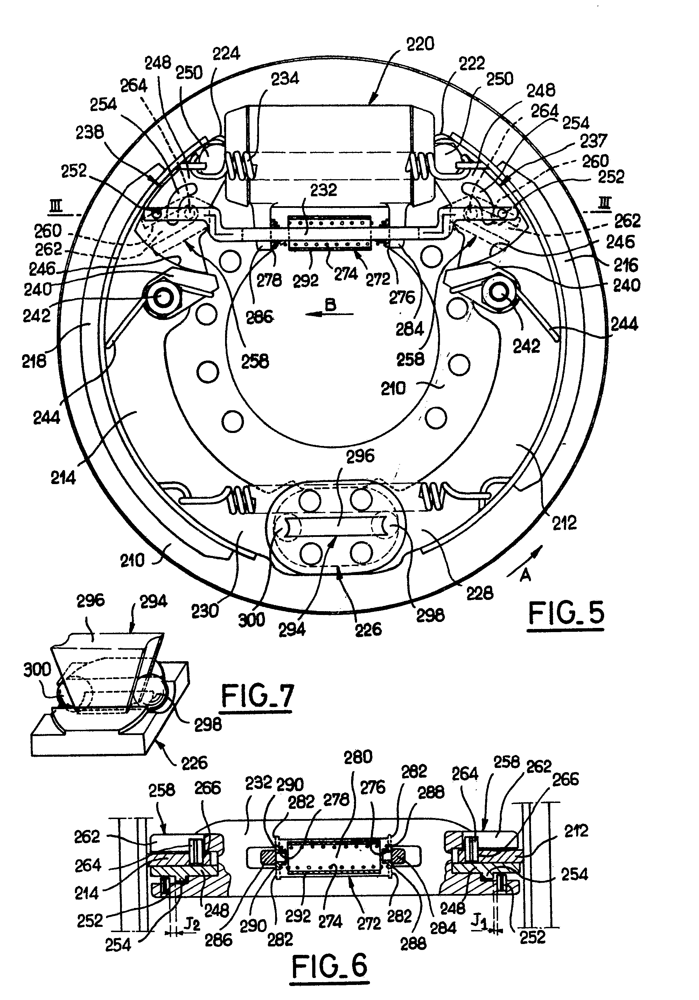

la figure 5 est une vue en plan d'un frein à tambour selon un troisième mode de réalisation;

la figure 6 représente une vue en coupe selon la ligne III-III du frein de la figure 5; et

la figure 7 représente une vue en perspective schématique d'un moteur de frein utilisé dans le frein de la figure 5.

Le frein à tambour représenté sur les figures 1 et 2 comporte une plaque support 10 normalement associée à une partie fixe du véhicule (non représentée) sur laquelle sont montés coulissants deux segments de frein 12 et 14 portant des éléments de friction 16 et 18 respectivement. Un moteur de frein désigné dans son ensemble par la référence 20 est interposé entre les premières extrémités 22 et 24 des segments 12 et 14 respectivement. Un bloc d'ancrage désigné dans son ensemble par la référence 26 est interposé entre les deux autres extrémités 28 et 30 respectivement des segments 12 et 14. Une entretoise 32 est placée au voisinage du moteur de frein 20. Un ressort 34 sollicite normalement le segment 12 en butée contre l'entretoise 32 au travers d'une encoche 36 formée sur le segment 12. De même le ressort 34 sollicite le segment 14 en butée contre l'entretoise 32 par l'intermédiaire d'un dispositif de rattrapage d'usure 38.

Le dispositif de rattrapage d'usure 38 comporte un cliquet 40 monté pivotant, par l'intermédiaire d'un rivet ou équivalent, formant pivot 42 sur l'âme du segment 14. L'extrémité du cliquet 40 est maintende en contact sous l'action d'un ressort de torsion 44 avec un secteur denté 46 formé sur l'extrémité d'un levier 48 monté pivotant par l'intermédiaire d'un rivet ou équivalent formant pivot 50 sur l'âme du segment 14. Le dispositif de rattrapage d'usure 38 est mis en oeuvre par un goupille cylindrique fendue 52 montée sur l'entretoise 32 et susceptible de coopérer avec une saillie 54 portée par le levier 48 après une course d'approche J comme représenté sur la figure 2. Un ressort 56 maintient l'entretoise 32 en appui sur le segment 12 pour permettre la mise en oeuvre du dispositif de rattrapage d'usure 38.

L'entretoise 32 porte un dispositif de maintien d'entretoise à une distance sensiblement constante du moteur de frein, ledit dispositif comporte un bras 58 formé sur l'entretoise 32 dans lequel est formée une rampe 60 au moyen d'un encoche rectiligne 62. La rampe 60 est susceptible de coopérer avec une goupille fendue 64 montée dans un aléssage 66 formé sur le segment 14.

Le frein qui vient d'être décrit fonctionne de la façon suivante:

Au repos, les différents éléments du frein occupent les positions représentées sur les figures 1 et 2. Lors d'une mise en oeuvre du frein au moyen du moteur de frein 20, celui-ci sollicite les segments 12 et 14 en écartement amenant ainsi les éléments de friction 16 et 18 en engagement de friction avec le tambour tournant (non représenté). Les segments 12 et 14 se trouvent en appui d'ancrage sur le bloc d'ancrage 26 par leurs extrémités 28 et 30 respectivement. Si un rattrapage d'usure est nécessaire, le levier 48 est sollicité par la goupille cylindrique fendue 52 au travers de la saillie 54 de manière à ce que le cliquet 40 saute une ou plusieurs dents sur le secteur denté 46, de telle sorte que l'écartement des extrémités 22 et 24 des segments devient plus important qu'avant la mise en oeuvre du moteur de frein 20. Le ressort 56 ayant un effort suffisant pour maintenir l'entretoise 32 en appui sur l'encoche 36 formée sur le segment 12.

En désignant par la flèche A le sens de rotation du tambour (non représenté) pendant un fonctionnement en marche avant, on définit le segment 12 comme étant le segment tendu et le segment 14 comme étant le segment comprimé, le frein étant du type à segment flottant.

Dans ce type de frein, on constate que lors de l'usure des éléments de friction l'extrémité 22 du segment tendu 12 se déplace vers la droite et vers le haut, en se référant à la figure 1, et l'extrémité 24 du segment comprimé 14 se déplace vers la gauche et vers le bas, toujours en se référant à la figure 1. On constate également que l'usure de l'élément de friction 16 du segment 12 est nettement inférieure à l'usure de l'élément de friction 18 du segment 14, et par conséquent que le mouvement vers le haut en se référant à la figure 1 de l'extrémité 22 du segment 12 est nettement inférieur au mouvement vers le bas de l'extrémité 24 du segment 14. Le mouvement vers le haut du segment 12 et donc de l'entretoise 32 n'est pas gênant du fait que celle-ci s'éloigne du moyeu tournant (non représenté) d'autant plus que ce mouvement vers le haut est d'amplitude faible. Au fur et à mesure de l'usure des éléments de friction 16 et 18 respectivement des segments 12 et 14, l'écartement des extrémités 22 et 24 des segments devient plus important, cet écartement étant maintenu au moyen du dispositif de rattrapage d'usure 38. Ce mouvement relatif des segments, du fait de l'appui de l'entretoise 32 sur l'encoche 36 du segment 12 provoque un mouvement relatif entre l'entretoise 32 et le segment 14, plus précisément entre l'entretoise 32 et la goupille fendue 64 portée par le segment 14. Ce mouvement relatif dans le sens longitudinal de l'entretoise 32 provoque la coopération de la rampe 60 et de la goupille fendue 64, sollicitant l'entretoise 32 vers le haut en se référant à la figure 1. L'inclinaison de la rampe 60 est telle que l'entraînement vers le haut de l'entretoise 32 par rapport au segment, correspond au mouvement vers le bas du segment 14; l'entretoise 32 restant donc sensiblement fixe par rapport au moteur de frein 20.

On a représenté sur les figures 3 et 4 un deuxième mode de réalisation d'un frein à tambour conforme à l'invention. Dans ce deuxième mode de réalisation, les organes remplissant des fonctions sensiblement identiques à des organes du premier mode de réalisation ont été désignés par les mêmes numéros de référence augmentés de 100.

Le frein représenté sur les figures 3 et 4 comporte une plaque support 110 normalement associée à une partie fixe du véhicule (non représentée) sur laquelle sont montés coulissants deux segments de frein 112 et 114 portant des éléments de friction 116 et 118 respectivement. Un moteur de frein désigné dans son ensemble par la référence 120 est interposé entre les premières extrémités 122 et 124 des segments 112 et 114 respectivement. Un bloc d'ancrage désigné dans son ensemble par la référence 126 est interposé entre les deux autres extrémités 128 et 130 respectivement des segments 112 et 114. Une entretoise 132 est placée au voisinage du moteur de frein 120. Un ressort 134 sollicite normalement le segment 112 en butée contre l'entretoise 132 par l'intermédiaire d'un dispositif de rattrapage d'usure 137. De même les ressort 134 sollicite le segment 114 en butée contre l'entretoise 132 par l'intermédiaire d'un deuxième dispositif de rattrapage d'usure 138.

Les dispositifs de rattrapage d'usure 137 et 138 comportent chacun un cliquet 140 monté pivotant, par l'intermédiaire d'un rivet ou équivalent, formant pivot 142 respectivement sur les âmes 112 et 114. L'extrémité du cliquet 140 est maintenu en contact sous l'action d'un ressort de torsion 144 avec un secteur denté 146 formé sur l'extrémité d'un levier 148 monté pivotant par l'intermédiaire d'un rivet ou équivalent formant pivot 150 respectivement sur l'âme du segment 112 et du segment 114. Les dispositifs de rattrapage d'usure 137 et 138 sont mis en oeuvre, chacun pour sa part, par une goupille cylindrique fendue 152 montée sur l'entretoise 132 et susceptible de coopérer avec une saillie 154 portée par chacun des leviers 148 après une course d'approche $J_1$ et $J_2$ respectivement comme re-

présenté sur la figure 4. Une saillie 168 solidaire du moteur de frein 120 traverse une ouverture 170 formée dans l'entretoise 132 de manière à immobiliser celle-ci dans le sens longitudinal formant ainsi un dispositif de centrage 172 pour permettre la mise en oeuvre des dispositifs de rattrapage d'usure 137 et 138.

L'entretoise 132 comporte à chacune de ses extrémités un dispositif de maintien d'entretoise à une distance sensiblement constante du moteur de frein, lesdits dispositifs étant formés par des bras 158 formés sur l'entretoise 132 dans lesquels sont réalisées des rampes 160 au moyen d'encoches 162. Les rampes 160 sont susceptibles de coopérer avec des goupilles fendues 164 montées dans des alésages 166 formés sur les segments 112 et 114.

Le frein qui vient d'être décrit en se référant aux figures 3 et 4 fonctionne de la façon suivante:

Au repos, les différents éléments du frein occupent les positions représentées sur les figures 3 et 4. Lors d'une mise en oeuvre du frein au moyen du moteur de frein 120, celui-ci sollicite les segments 112 et 114 en écartement amenant ainsi les éléments de friction 116 et 118 en engagement de friction avec le tambour tournant (non représenté). Les segments 112 et 114 se trouvent en appui d'ancrage sur le bloc d'ancrage 126 par leurs extrémités 128 et 130 respectivement, les extrémités 128 et 130 ainsi que le bloc d'ancrage 128 sont réalisés de manière à permettre une articulation des segments 112 et 114 par rapport audit bloc d'ancrage 126. Si un rattrapage d'usure est nécessaire, les leviers 148 sont sollicités par les goupilles cylindriques fendues 152 au travers des saillies 154 de manière à ce que les cliquets 140 sautent une ou plusieurs dents sur les secteurs dentés 146, de telle sorte que l'écartement des extrémités 122 et 124 des segments devient plus important qu'avant la mise en oeuvre du moteur de frein 120. La coopération de la saillie 128 et de l'ouverture 170 permet à l'entretoise 132 de ne pas se déplacer à droite ou à gauche en se référant à la figure 3, de manière à ce que chacun des dispositifs de rattrapage d'usure 137 et 138 fonctionne convenablement, c'est-à-dire que chacun des dispositifs de rattrapage d'usure compense l'usure de l'élément de friction correspondant.

En désignant par la flèche A le sens de rotation du tambour (non représenté) pendant un fonctionnement en marche avant, on définit le segment 112 comme étant le segment tendu et le segment 114 comme étant le segment comprimé, le frein étant du type à segment articulé sur le bloc d'ancrage.

Dans ce type de frein on constate que lors de l'usure des éléments de friction, l'extrémité 122 du segment tendu 112 se déplace vers la droite et vers le bas en se référant à la figure 3, et l'extrémité 124 du segment comprimé 114 se déplace vers la gauche et vers le bas toujours en se référant à la figure 3. On constate également que l'usure de l'élément de friction 116 du segment 112 est nettement inférieure à l'usure de l'élément de friction 118 du segment 114, et par conséquent que le mouvement vers le bas en se référant à la figure 3 de l'extrémité 122 du segment 112 est nettement inférieur au mouvement vers le bas de l'extrémité 124 du segment 114; en effet, les deux segments 112 et 114 sont articulés sur le bloc d'ancrage 126. Au fur et à mesure de l'usure des éléments de friction 116 et 118 respectivement des segments 112 et 114, l'écartement des extrémités 112 et 124 des segments devient plus important, cet écartement étant maintenu au moyen des dispositifs de rattrapage d'usure 137 et 138. Ce mouvement relatif des segments, du fait de l'immobilisation longitudinale de l'entretoise 132 au moyen de la saillie 168 et de l'ouverture 170 provoque un mouvement relatif entre l'entretoise 132 et chacun des segments 112 et 114, plus précisément entre l'entretoise 132 et chacune des goupilles fendues 164 portées par les segments 112 et 114. Ces mouvements relatifs dans le sens longitudinal de l'entretoise 132 provoquent la coopération des rampes 160 et des goupilles fendues 164, sollicitant l'entretoise 132 vers le haut en se référant à la figure 3. L'inclinaison des rampes 160 est telle que l'entraînement vers le haut de l'entretoise 132 par rapport aux segments correspond au mouvement vers le bas des segments 112 et 114; l'entretoise 132 restant donc sensiblement fixe par rapport au moteur de frein 120.

On a représenté sur les figures 5 à 7 un troisième mode de réalisation d'un frein à tambour conforme à l'invention. Dans ce troisième mode de réalisation, les organes remplissant des fonctions sensiblement identiques à des organes du premier mode de réalisation ont été désignés par les mêmes numéros de référence augmentés de 200.

Le frein représenté sur les figures 5 à 7 comporte une plaque support 210 normalement associée à une partie fixe du véhicule (non représentée) sur laquelle sont montés coulissants deux segments de frein 212 et 214 portant des éléments de friction 216 et 218 respectivement. Un moteur de frein désigné dans son ensemble par la référence 220 est interposé entre les premières extrémités 222 et 224 des segments 212 et 214 respectivement. Un bloc d'ancrage désigné dans son ensemble par la référence 226 est interposé entre les deux autres extrémités 228 et 230 respectivement des segments 212 et 214. Une entretoise 232 est placée au voisinage du moteur de frein 220. Un ressort 234 sollicite normalement le segment 212 en butée contre l'entretoise 232 par l'intermédiaire d'un dispositif de rattrapage d'usure 237. De même le ressort 234 sollicite le segment 214 en butée contre l'entretoise 232 par l'intermédiaire d'un deuxième dispositif de rattrapage d'usure 238.

Les dispositifs de rattrapage d'usure 237 et 238 comportent chacun un cliquet 240 monté pivotant, par l'intermédiaire d'un rivet ou équivalent, formant pivot 242 respectivement sur les âmes des segments 212 et 214. L'extrémité du cliquet 240 est maintenue en contact sous l'action d'un ressort de torsion 244 avec un secteur denté 246 formé sur l'extrémité d'un levier 248 monté pivotant par l'intermédiaire d'un rivet ou équivalent formant pivot 250 respectivement sur l'âme du segment 212 et du segment 214. Les dispositifs de rattrapage d'usure 237 et 238 sont mis en oeuvre, chacun pour sa part, par une goupille cylindrique fendue 252 montée sur l'entretoise 232 et susceptible de coopérer avec une saillie 254 portée par chacun des leviers 248 après une course d'approche $J_1$ et $J_2$ respectivement comme représenté sur la figure 6. L'entretoise 232 porte un dispositif de centrage désigné dans son ensemble par la référence 272. Ce dispositif comporte un ressort 274 monté entre deux coupelles 276 et 278 placées dans une ouverture 280 formée sur l'entretoise 232. Les coupelles 276 et 278 comportent des saillies 282 permettant à celles-ci de coulisser dans l'ouverture 280 formée dans l'entretoise 232. Les coupelles 276 et 278 sont en appui d'une part sur des éléments d'appui fixes 284 et 286 portés par le moteur de frein 220 et d'autre part en appui sur des portions d'appui 288 et 290 formées par des épaulements réalisés dans l'ouverture 280 de l'entretoise 232. Un tube 292 est monté autour du ressort 274 pour éviter à celui-ci de flamber.

L'entretoise 232 comporte à chacune de ses extrémités un dispositif de maintien d'entretoise à une distance sensiblement constante du moteur de frein, lesdits dispositifs étant formés par des bras 258 formés sur l'entretoise 232 dans lequels sont réalisées des rampes 260 au moyen d'encoches 262. Les rampes 260 sont susceptibles de coopérer avec des goupilles fendues 264 montées dans des alésages 266 formés sur les segments 212 et 214.

Entre les extrémités 228 et 230 respectivement des segments 212 et 214 est interposé un deuxième moteur de frein désigné dans son ensemble par la référence 294. Ce moteur de frein 294 est du type à actionnement mécanique et peut être du type de celui décrit dans le brevet français publié sous le No. 2 291 411 et représenté schématiquement sur la figure 7. Ce moteur comporte un coin 296 susceptible de solliciter en écartement deux éléments sphériques 298 et 300 qui euxmêmes sollicitent en écartement les extrémités 228 et 230 des segments 212 et 214 respectivement.

Le frein qui vient d'être décrit en se référant aux figures 5 à 7 fonctionne de la façon suivante:

Au repos, les différents éléments du frein occupent les positions représentées sur les figures 5 à 7. Lors d'une mise en oeuvre hydraulique du frein la mise sous pression du moteur de frein 220 sollicite les segments 212 et 214 en ancrage contre les surfaces d'appui formées sur le bloc d'ancrage 226, amenant ainsi les éléments de friction 216 et 218 en contact de friction avec le tambour (non représenté). Si un rattrapage de l'usure des garnitures est nécessaire, les leviers 248 sont sollicités par les goupilles cylindriques fendues 252 au travers des saillies 254 de manière à ce que les cliquets 242 sautent une ou plusieurs dents sur les secteurs dentés 246 de telle sorte que l'écartement des extrémités 222 et 224 des segments devient plus important qu'avant la mise en oeuvre du moteur de frein 220. Le ressort 274 du dispositif de centrage 272 ayant une précontrainte telle que l'entretoise 232 reste immobile lors du mouvement des segments 212 et 214 et donc lors de la mise en oeuvre des dispositifs de rattrapage d'usure 237 et 238. Le fonctionnement est alors identique à celui décrit pour le deuxième mode de réalisation.

Lors d'une mise en oeuvre du frein au moyen du moteur de frein mécanique 294, le coin 296 est sollicité vers le bas en considérant la figure 7, de telle sorte qu'il tend à écarter les billes 298 et 300 qui sollicitent les extrémités 228 et 230 respectivement des segments 212 et 214 en éloignement l'une de l'autre. En désignant par la flèche A le sens de rotation du tambour (non représenté) l'engagement en friction de l'élément de friction 216 entraîne le segment 212 dans le sens de la flèche A. Le segment 212 trouve une réaction d'appui sur l'entretoise 232 qui se déplace dans le sens de la flèche B sollicitant ainsi le segment 214 en engagement de friction contre le tambour tournant. Le segment 214 trouve une réaction d'appui sur le bloc d'ancrage 226 en repoussant la bille 300. Lors du mouvement de l'entretoise 232 la coupelle 276 est entraînée par l'épaulement 288 de l'ouverture 280 en éloignement de l'élément d'appui fixe 284, et ceci en comprimant le ressort 274. La coupelle 278 étant en appui sur l'élément d'appui fixe 286 ne se déplace pas. Au relâchement du freinage, le ressort 274 repousse l'entretoise 232 par l'intermédiaire de la coupelle 276 en appui sur l'épaulement 288 jusqu'à ce que ladite coupelle 276 vienne en appui sur l'élément d'appui fixe 284, l'entretoise 232 retrouvant ainsi sa position recentrée par rapport auf frein. Dans le fonctionnement en commande mécanique qui vient d'être décrit, l'entretoise 232 étant d'une part maintenu centré par le dispositif de centrage 272 et d'autre part maintenu dans une position sensiblement constante par rapport au moteur de frein 220 du fait des deux dispositifs de maintien placés aux deux extrémités de ladite entretoise n'aura que peu de mouvement par rapport au moteur de frein.

Il apparaît de la description qui précède que le dispositif de maintien de l'entretoise à une distance sensiblement constante du moteur de frein permet d'éviter, dans les trois modes de réalisation décrits une interférence entre l'entretoise et le moyeu tournant passant par le centre du frein.

Dans les trois modes de réalisation décrits la rampe 60, 160, 260 est rectiligne pour des raisons de facilité de fabrication, normalement cette rampe devrait avoir la forme d'un arc de cercle centré sur l'axe de rotation du segment. L'expérience a montré que le remplacement de cet arc de cercle par une portion droite permettait de garder l'entretoise dans une position sensiblement constante par rapport au moteur de frein. La forme de la rampe peut donc avoir toute forme assimilable, dans des limites raisonables, à un arc de cercle sans sortir du cadre de l'invention.

Il va de soi que les moteurs de frein peuvent être hydrauliques ou mécaniques, les rampes peuvent être formées sur les segments, les saillies étant portées par l'entretoise sans sortir du cadre de l'invention.

## Revendications

1. Frein à tambour comportant une plaque support (10, 110, 210) sur laquelle sont montés coulissant deux segments (12, 112, 212; 14, 114, 214) comportant des éléments de friction (16, 116, 216; 18, 118, 218) et susceptibles d'être amenés en engagement de friction contre un tambour tournant par un moteur de frein (20, 120, 220) interposé entre deux premières extrémités (22, 122, 222; 24, 124, 224) adjacentes desdits segments et comportant une entretoise (32, 132, 232) placée entre lesdites premières extrémités et coopérant avec au moins un desdits segments (14, 112, 114, 212, 214) au travers d'un dispositif de rattrapage (38, 137, 138, 237, 238) d'usure destiné à maintenir lesdits segments à une distance relative d'autant plus grande que l'usure des éléments de friction est élevée, le frein comportant un dispositif de maintien de l'entretoise (32, 132, 232) à une certaine distance du moteur de frein (20, 120, 220), ledit dispositif de maintien relié d'une part à un desdits segments (14, 112, 114, 212, 214) et d'autre part à ladite entretoise (32, 132, 232) comporte un guidage (60, 160, 260) et une saillie (64, 164, 264) susceptibles de coopérer lors du déplacement relatif desdits deux segments (12, 112, 212; 14, 114, 214), caractérisé en ce que ledit guidage forme une rampe (60, 160, 260) inclinée de telle sorte que la distance entre ladite entretoise et ledit moteur de frein reste sensiblement constante.

2. Frein à tambour selon la revendication 1, caractérisé en ce que ladite saillie (64, 164, 264) du dispositif de maintien est portée par un desdits segments (14, 112, 114, 212, 214) et en ce que ladite rampe (60, 160, 260) dudit dispositif de maintien est portée par un bras (58, 158, 258) formé sur ladite entretoise (32, 132, 232).

3. Frein à tambour selon la revendication 2, caractérisé en ce que ladite entretoise (32) comporte une saillie susceptible de coopérer avec une saillie (54) portée par l'élément mobile (48) du dispositif de rattrapage d'usure (38) pour mettre en oeuvre celui-ci sous l'action d'un ressort (56) maintenant l'entretoise (32) en appui sur l'autre (12) desdits segments lors de la mise en oeuvre du moteur de frein (20).

4. Frein à tambour selon la revendication 1 ou 2, caractérisé en ce que ladite entretoise (132, 232) coopère avec chacun desdits segments (112, 212; 114, 214) au travers du dispositif de rattrapage d'usure (137, 138; 237, 238) et en ce que ladite entretoise (132, 232) comporte à chacune de ses extrémités ledit dispositif de maintien de l'entretoise.

5. Frein à tambour selon la revendication 4, caractérisé en ce que le frein comporte un dispositif de centrage (172, 272) relié d'une part à la plaque support (110, 210) et d'autre part à l'entretoise (132, 232) et permettant à celle-ci de rester immobile longitudinalement lors de la mise en oeuvre du moteur de frein (120, 220).

6. Frein à tambour selon la revendication 5, caractérisé en ce qu'un deuxième moteur de frein (294) est placé entre les deux autres extrémités (228, 230) adjacentes des segments (212, 214), et en ce que ledit dispositif de centrage (272) prend appui d'une part sur deux éléments d'appui fixes (284, 286) par rapport à ladite plaque support (210) et d'autre part sur deux portions d'appui (288, 290) portées par ladite entretoise (232), ledit dispositif de centrage (272) sollicitant ladite entretoise (232) vers une position centrale de repos.

7. Frein à tambour selon l'une quelconque des revendications précédentes, caractérisé en ce que les saillies (52, 152, 252) formées sur l'entretoise (32, 132, 232) d'une part et les saillies (64, 164, 264) formées sur les segments d'autre part sont réalisés au moyen de goupilles cylindriques fendues montées dans des alésages correspondants formés dans ladite entretoise (32, 132, 232) et dans lesdits segments (14, 112, 114, 212, 214).

8. Frein à tambour selon l'une quelconque des revendications précédentes caractérisé en ce que ladite rampe (60, 160, 260) est rectiligne.

9. Frein à tambour selon les revendications 6 ou 7, caractérisé en ce que le dispositif de centrage (272) est formé par un ressort (274) monté entre deux coupelles (276, 278) susceptibles de coulisser dans une ouverture (280) formée dans l'entretoise (232), chacune des coupelles (276, 278) étant en appui sur une saillie fixe (276, 278) par rapport à la plaque support (210) et sur des épaulements (288, 290) formés dans ladite entretoise (232).

## Patentansprüche

1. Trommelbremse mit einem Bremsschild (10, 110, 210), auf dem zwei Bremsbacken (12, 112, 212; 14, 114, 214) gleitbar gelagert sind, wobei die beiden Bremsbacken Reibbeläge (16, 116, 216; 18, 118, 218) haben und in Reibanlage mit einer umlaufenden Bremstrommel bewegbar sind, und zwar durch einen Bremsmotor (20, 120, 220), der zwischen zwei ersten benachbarten Enden (22, 122, 222; 24, 124, 224) der Bremsbacken angeordnet ist und eine Druckscheibe (32, 132, 232) aufweist, die zwischen den besagten ersten Enden angeordnet ist und mit mindestens einem der Bremsbacken (14, 112, 114, 212, 214) über eine Nachstellvorrichtung (38, 137 138, 237, 238) zusammenwirkt, die die Bremsbacken in einem Abstand zueinander hält, der um so größer ist, je größer die Abnutzung der Reibbeläge ist, wobei die Bremse eine Haltevorrichtung aufweist, die die Druckscheibe (32, 132, 232) in einem vorgegebenen Abstand vom Bremsmotor (20, 120, 220) hält, wobei die Haltevorrichtung, die einerseits mit einem der Bremsbacken (14, 112, 114, 212, 214) und andererseits mit der Druckstrebe (32, 132, 232) verbunden ist, eine Führung (60, 160, 260) und einen Vorsprung (64, 164, 264) aufweist, die bei einer Relativverschiebung der beiden Bremsbacken (12, 112, 212; 14, 114, 214) zusammenwirken, dadurch gekennzeichnet, daß die Führung eine Rampe (60, 160, 260) aufweist, die so geneigt ist, daß der Abstand zwischen der Druckstrebe und dem Bremsmotor im wesentlichen konstant bleibt.

2. Trommelbremse nach Anspruch 1, dadurch gekennzeichnet, daß der Vorsprung (64, 164, 264) der Haltevorrichtung von einem der Bremsbakken (14, 112, 114, 212, 214) getragen wird und daß die Rampe (60, 160, 260) der Haltevorrichtung von einem an der Druckstrebe (32, 132, 232) gebildeten Arm (58, 158, 258) getragen wird.

3. Trommelbremse nach Anspruch 2, dadurch gekennzeichnet, daß die Druckstrebe (32) einen Vorsprung aufweist, der mit einem von dem beweglichen Element (48) der Nachstellvorrichtung (38) getragenen Vorsprung (54) zusammenwirkt, um die Nachstellvorrichtung unter der Wirkung einer Feder (56) zu betätigen, die die Druckstrebe (32) bei Betätigung des Bremsmotors (20) in Anlage mit dem anderen Bremsbacken (12) hält.

4. Trommelbremse nach Anspruch 1 oder 2, dadurch gekennzeichnet, daß die Druckstrebe (132, 232) mit jeder der Bremsbacken (112, 212; 114, 214) über die Nachstellvorrichtung (137, 138; 237, 238) zusammenwirkt und daß die Druckstrebe (132, 232) an jedem ihrer Enden die Haltevorrichtung enthält.

5. Trommelbremse nach Anspruch 4, dadurch gekennzeichnet, daß die Bremse eine Zentriervorrichtung (172, 272) aufweist, die einerseits mit dem Bremsschild (110, 210) und andererseits mit der Druckstrebe (132, 232) verbunden ist und dafür sorgt, daß die Druckstrebe bei der Betätigung des Bremsmotors (120, 220) in Längsrichtung unbeweglich bleibt.

6. Trommelbremse nach Anspruch 5, dadurch gekennzeichnet, daß ein zweiter Bremsmotor (294) zwischen den beiden anderen benachbarten Enden (228, 230) der Bremsbacken (212, 214) angeordnet ist und daß die Zentriervorrichtung (272) einerseits an zwei festgelegten Anschlagelementen (284, 286) bezüglich des Bremsschildes (210) abgestützt ist und andererseits an zwei von der Druckstrebe (232) getragenen Anschlageabschnitten (288, 290) abgestützt ist, wobei die Zentriervorrichtung (272) die Druckstrebe (232) in Richtung auf eine zentrale Ruhestellung vorspannt.

7. Trommelbremse nach einem der vorhergehenden Ansprüche, dadurch gekennzeichnet, daß die an der Druckstrebe (32, 132, 232) gebildeten Vorsprünge (52, 152, 252) einerseits und die an den Bremsbacken gebildeten Vorsprünge (64, 164, 264) andererseits von zylindrischen Splinten gebildet werden, die in entsprechenden Bohrungen der Druckstrebe (32, 132, 232) und der Bremsbacken (14, 112, 114, 212, 214) angebracht sind.

8. Trommelbremse nach einem der vorhergehenden Ansprüche, dadurch gekennzeichnet, daß die Rampe (60, 160, 260) geradlinig ausgebildet ist.

9. Trommelbremse nach Anspruch 6 oder 7, dadurch gekennzeichnet, daß die Zentriervorrichtung (272) von einer Feder (274) gebildet wird, die zwischen zwei Beilagscheiben (276, 278) angebracht ist, die in einer Öffnung (280) der Druckstrebe (232) gleitbar sind, wobei jede der Beilagscheiben (276, 278) an einem bezüglich des Bremsschildes (210) festen Vorsprung (276, 278) und an Schultern (288, 290) der Druckscheibe (232) abgestützt ist.

**Claims**

1. Drum brake comprising a support plate (10, 110, 210), upon which are slidingly mounted two segments (12, 112, 212; 14, 114, 214) comprising friction elements (16, 116, 216; 18, 118, 218) and adapted to be moved into frictional engagement with a rotating drum by a brake motor (20, 120, 220) interposed between two adjacent first extremities (22, 122, 222; 24, 124, 224) of said segments and comprising a strut (32, 132, 232) disposed between said first extremities and cooperating with at least one of said segments (14, 112, 114, 212, 214) via a wear adjustment device (38, 137, 138, 237, 238) adapted to maintain said segments at a relative distance increasing in response to an increase of wear of the friction elements, the brake comprising a device for maintaining the strut (32, 132, 232) at a certain distance of the brake motor (20, 120, 220), said maintaining device connected on one side to said segments (14, 112, 114, 212, 214) and on the other side to said strut (32, 132, 232) comprising a guide (60, 160, 260) and a projection (64, 164, 264) adapted to cooperate during relative displacement of said two segments (12, 112, 212; 14, 114, 214), characterized in that said guide forms a ramp (60, 160, 260) inclined such that the distance between said strut and said brake motor remains substantially constant.

2. Drum brake according to claim 1, characterized in that said projection (64, 164, 264) of said maintaining device is carried by one of said segments (14, 112, 114, 212, 214) and in that said ramp (60, 160, 260) of said maintaining device is carried by an arm (58, 158, 258) formed on said strut (32, 132, 232).

3. Drum brake according to claim 2, characterized in that said strut (32) comprises a projection adapted to cooperate with a projection (54) carried by the movable element (48) of the wear adjustment device (38) in order to actuate the latter under the action of a spring (56) maintaining the strut (32) in engagement with the other (12) of said segments during operation of the brake motor (20).

4. Drum brake according to claim 1 or claim 2, characterized in that said strut (132, 232) cooperates with each of said segments (112, 212; 114, 214) via the wear adjustment device (137, 138; 237, 238) and in that said strut (132, 232) comprises at each of its extremities said strut maintaining device.

5. Drum brake according to claim 4, characterized in that the brake comprises a centering device (172, 272) connected on the one side to the support plate (110, 210) and on the other side to the strut (132, 232) and permitting the latter to remain longitudinally fixed during operation of the brake motor (20, 220).

6. Drum brake according to claim 5, characterized in that a second brake motor (294) is disposed between the two other adjacent extremities (228, 230) of the segments (212, 214) and in that said centering device (272) engages on the one side two abutment elements (284, 286) fixied with respect to said support plate (210) and on the other side to abutment portions (288, 290) carried by said strut (232), said centering device (272) biasing said strut (232) towards a central rest position.

7. Drum brake according to any of the preceding claims, characterized in that the projections (52, 152, 252) formed on the strut (32, 132, 232) on the one hand and the projections (64, 164, 264) formed on the segments on the other side are comprised of cylindrical splitpins mounted in corresponding bores formed in said strut (32, 132, 232) and in said segments (14, 112, 114, 212, 214).

8. Drum brake according to any of the preceding claims, characterized in that said ramp (60, 160, 260) is rectilinear.

9. Drum brake according to claim 6 or claim 7, characterized in that said centering device (272) is formed by a spring (274) mounted between two washers (276, 278) adapted to slide in an opening (280) formed in the strut (232), each of the washers (276, 278) being in engagement with a fixed projection (276, 278) with respect to the support plate (210) and with shoulders (288, 290) formed in said strut (232).

FIG_1

FIG_2

FIG. 3

FIG. 4

FIG. 5

FIG. 7

FIG. 6